# EUROPEAN PATENT APPLICATION

(11) **EP 1 566 745 A1**
(43) Date of publication of application: **24.08.2005**
(21) Application number: 04003750.9
(22) Date of filing: 19.02.2004
(51) Int. Cl.: G06F 17/30

(54) **Generation of database queries from database independent selection conditions**

(71) Applicant: UBS AG, 8001 Zürich (CH)
(72) Inventor: Enzler, Urs, 6318 Walchwil (CH); Pfenniger, Rolf, 6410 Goldau (CH); Devigus, Arturo, 6403 Küssnacht (CH)
(74) Representative: Röthinger, Rainer

(57) **Abstract**

The invention relates to a method and a computer component for generating a database query from a database independent search request. In a first step, one or more predefined query strings are provided in a database specific format. The query strings include one or more placeholders that substitute database specific selection operators. In a next step, a search request is received in a database independent format. The search request specifies at least one selection condition. Then, one or more database specific selection operators are derived from the at least one selection condition specified in the search request. Generation of the database query includes substituting the placeholders in one or more of the predefined query strings with the database specific selection operators derived from the search request.

## Description

### Field of the Invention

The invention relates to the field of database technology. More specifically, the invention relates the automatic generation of search queries.

### Background of the Invention

In the early days of information technology (IT), data was typically handled in a centralized approach. This meant, for example, that the same component that was in charge of data processing was also responsible for data management, including reading data from and writing data to memory.

The former centralized approach was discontinued with the advent of so-called client/server architectures during the last decade. In general, the client/server approach relates to a style of computing that distributes the workload of a computer application across several cooperating computer programs running on one or more computers. With this workload distribution, individual programs act as service providers (servers), service requestors (clients), or a combination thereof. The individual service providers and requestors communicate with each other via predefined interfaces and protocols. These predefined interfaces and protocols provide a high level of flexibility when designing client/server architectures.

The client/server style of computing usually separates data management from user-oriented tasks and application tasks. Having data management independent from data presentation and the application logic offers many benefits, including a high scalability. Also, the independent nature of the data management allows a plurality of different applications to share common database services.

Such database services include the retrieval of selected data from a database storage (data base search). In short, a database search can be implemented as follows. First, a user defines selection conditions (e.g., by filling in an electronic search form presented by a web browser on a user screen) for a search request. The user-specified selection conditions usually have a database independent format. Each selection condition specifies the data to be retrieved from the database in a certain way. In an address database, for example, a particular selection condition may limit the database records that are to be retrieved to all addresses that include a particular town. This selection condition would include a selection value (the town's name) as well as a selection type (the equal operator "=") specifying that an exact match is required.

As the search request including the selection conditions has a database independent format, it has to be translated into a database specific query language that can be understood by the database server. Several languages for formulating database queries are currently in use (e.g., the Structured Query Language (SQL)). The translation task is typically performed by a dedicated application. The translated database query is then sent to the database server. The database server retrieves the requested data and transfers it to the requesting application, which forwards the data for presentation purposes to the user component.

There is a need for a mechanism for efficiently and flexibly transforming a database independent search request into a database specific query.

### Summary of the Invention

According to one aspect of the invention, this need is satisfied by a method of generating a database query, the method comprising the step of providing one or more predefined query strings in a database specific format, the predefined query strings including one or more first placeholders that are substitutes for database specific selection operators, the step of receiving a search request in a database independent format, the search request specifying at least one selection condition, the step of deriving one or more database specific selection operators from the at least one selection condition specified in the search request, and the step of substituting the first placeholders in one or more of the predefined query strings with the database specific selection operators previously derived from the at least one selection condition to generate a database query.

The predefined query strings provided in the database specific format may be fragments of the database query to be generated. In such a case two or more predefined query strings may be required to generate the database query. Alternatively, the database query is generated from a single predefined query string (e.g., by replacing any placeholders included therein and/or by appending user-specified query strings derived from the selection conditions).

The invention may be practiced in the context of generating a list of database records matching the selection conditions specified in the search request. The selection conditions may at least partially be defined by a user or automatically by a suitably-programmed application. The selection conditions may include one or more default parameters.

Preferably, the provided query strings are assigned to or reference individual database portions like columns of a database. The strings may then be completed in accordance with the actual selection condition specified for this database portion in the search request. Some or all of the selection conditions may relate to particular database portions.

The step of substituting one or more of the first placeholders with suitable database specific selection operators may deliver the final database query or may be only one of a plurality of steps that are performed to generate the final database query. Accordingly, the process of generating the database query may relate to more than the plain selection of a single query string and the substitution of one or more first placeholders included therein.

In the following, various aspects in conjunction with dynamically generating database queries that relate to a changing number of specified selection conditions are described. It has been found that these dynamic aspects ideally complement the placeholder approach outlined above. However, the dynamic aspects may also be implemented independently from the placeholder approach.

For example, the process of dynamically generating the database query may include the step of concatenating two or more single query strings, each of which may relate to at least one selection condition. It should be noted that besides query strings relating to selection conditions, other query strings may be provided (and concatenated) that do not or not directly relate to selection conditions. Such other query strings may, for example, contain database specific statements such as references to specific portions like tables and/or columns of a particular database to be searched.

Some or all of the predefined query strings that are to be concatenated may relate to exactly one selection condition. This means that for each individual selection condition specified in the search request, a particular predefined query string is chosen and, if the search request includes two or more selection conditions, the particular query string is concatenated with other query strings that preferably also relate to exactly one selection condition. Accordingly, the provided query strings can be considered as the elementary portions for assembling the database query.

Assume for example that an address database is provided. Such an address database may include one or more address tables with individual columns for street, town, etc. The actual database records retrieved by a database server in response to a database query may then depend on the particular selection conditions specified for the database portions "street" and "town" in the search request. Elementary query strings for the database portion street and the database portion town may be provided and concatenated to generate the database query.

As an alternative or in addition to the provision of elementary query strings relating to individual selection conditions, predefined query strings relating to a combination of two or more selection conditions may be provided. In this case, the number of concatenating operations required to generate the database query may be reduced or concatenating operations may completely be avoided. Accordingly, a single query string relating to more than two selection conditions may be selected dependent on a combination of two or more selection conditions specified in the search request. This means in the above example that if the search request simultaneously specifies selection conditions for the database portions "street" and "town", a single predefined query string generically relating to exactly these two database portions may be selected for generating the database query.

To further reduce the number of concatenating operations, selection of a particular predefined query string may be performed such that the query string having the highest number of generically specified selection conditions or referenced database portions in common with the content of the received search request is chosen. If necessary, additional elementary query strings may be appended to generate a database query exactly (or to the largest possible extent) corresponding to the content of the search request.

The dynamic aspects outlined above for generating database queries in response to varying numbers of selection conditions specified in the search request help to reduce the total number of predefined query strings that have to be initially provided. In particular, the dynamic aspects help to efficiently address dynamic changes in the electronic search form or in the database structure (like the appending of further columns to existing database tables). The dynamic aspects permit the taking into account of the content of these appended columns during database searches without the need to provide a complete new set of query strings.

The search request underlying the database query may relate to a predefined set of selection conditions. This predefined set of selections conditions may, for example, correspond to the individual fields of an electronic search form requesting the user to specify the selection conditions. Preferably, the selection conditions specified in the search request mirror the fields of the electronic search form. This could mean that even if a user has not filled in a particular field, a corresponding selection condition (which could simply contain a dummy value or which could be un-initialized) may be included in the search request. Such an approach facilitates interface programming and dynamic query generation.

As has been mentioned above, the predefined query strings include first placeholders that substitute database specific selection operators. These first placeholders could additionally substitute selection values included in the selection conditions.

The selection values included in the selection conditions may be database independent or database specific. In the case of database independent selection values, database specific selection values may be derived from the database independent selection values taking into account respective database specific or database independent selection operators specified in the search request. In an exemplary SQL context, deriving database specific selection values may include the incorporation of the wildcard "%" in a database independent selection value.

In a further embodiment, the predefined query strings may include second placeholders that are substitutes for selection values. The first and second placeholders may be substituted in a single step. In a preferred embodiment, the first placeholders and the second placeholders are substituted in different steps. An application component may, for example, be configured to only replace the first placeholders in the predefined query strings. This means that the second placeholders that substitute the selection values remain in the database query. The selection values may, together with the database query that includes only second placeholders, be transferred to a database server. It would then be the task of the database server to substitute the second placeholders with the appropriate selection values. Such an approach reduces the overall processing necessary to handle consecutive searches in which only the selection values but not the selection operators change. This efficiency is based on the fact that one and the same database query with already substituted first placeholders may be re-used by the database server.

The search request (and thus the selection conditions) may be received in a presentation specific format reflecting data entry requirements (or restrictions) such as the fields of an electronic search form. In this case, the selection conditions may be normalized with respect to the needs of a particular application and/or database component prior to generating the database query. Such an approach is particularly advantageous if the search requests are received in different formats, from different presentation platforms and/or from user-specific electronic search forms.

The normalized selection conditions processed by the application component may include at least one of filter type information indicative of selection operators, filter value information indicative of selection values, and a database portion reference. The database portion reference may relate to the particular database portion (e.g., a column of a table) to which a particular selection condition is to be applied.

A data access component may be provided that controls the generation of the database query on the basis of the normalized or original selection conditions. The data access component may additionally control communication with the database service. The data access component may determine one or more database specific operators taking into account the filter information included in the (normalized) selection conditions. The step of determining the database specific operators may include a mapping operation.

The query strings used to generate the database query may be provided in various forms (e.g., in the form of program code portions, in the form of database records, as a string array etc.) and may be processed by the data access component or by a dedicated component called by the data access component.

The invention may be implemented in the form of software, hardware or as a combination thereof. Accordingly, the invention also relates to a computer program product comprising program code portions for performing the steps of the invention when the computer program product is run on one or more components of a computer system. The computer program product may be stored on a computer readable recording medium.

According to a further aspect, the invention relates to a computer component for generating a database query. The computer component comprises a storage device or access to a storage device for providing one or more predefined query strings in a database specific format, wherein the predefined query strings include one or more first placeholders that are substitutes for database specific selection operators, a first interface for receiving a search request in a database independent format, the search request specifying at least one selection condition, and a processor for deriving one or more database specific selection operators from the at least one selection condition specified in the search request and for substituting the first placeholders in one or more of the predefined query strings with the database specific selection operators previously derived from the at least one selection condition to generate a selective database query.

The computer component may further comprise a second interface to a database service for sending the generated database query to a database service. The second or a third interface may be used for receiving from the database service the requested data.

A computer system comprising the computer component may be configured as a multi-tiered system. Accordingly, the computer component may be configured as an application server, and the computer system may further comprise presentation and database servers coupled to the application server (e.g., by the first and second interfaces respectively).

### BRIEF DESCRIPTION OF THE DRAWINGS

In the following the invention will be described with reference to exemplary embodiments illustrated in the figures, in which
- Fig. 1: is a schematic block diagram of the three-tiered computer system according to the present invention;
- Fig. 2: is a flow chart illustrating the individual steps for generating a database query in accordance with a first embodiment of the present invention;
- Fig. 3: is a hardware-oriented flow chart illustrating a method for generating a database query in accordance with a second embodiment the present invention;
- Fig. 4: is a diagram illustrating the generation of a database query on the basis of user-specified search criteria in accordance with the second embodiment;
- Figs. 5 to 7: are flowcharts illustrating the individual steps for generating a dat abase query in accordance with the second embodiment.

### DESCRIPTION OF PREFERRED EMBODIMENTS

In the following description, for purposes of explanation and not limitation, specific details are set forth, such as particular embodiments, query languages, etc., in order to provide a thorough understanding of the present invention. It will be apparent to one skilled in the art that the present invention may be practiced in other embodiments that depart from these specific details. In particular, while the embodiments are described herein below with respect to a three-tiered computer system, the present invention is not limited to such an implementation but can for example be utilized in a two-tiered or four-tiered computer system or in a single computer component. Moreover, while in the following embodiments the invention is described in context with a relational database and an SQL database server, other databases and database servers may be used instead.

Those skilled in the art will appreciate that the functions explained herein below may be implemented using individual hardware circuitry, using software functioning in conjunction with a programmed microprocessor or general purpose computer, using an application specific integrated circuit (ASIC), and/or using one or more digital signal processors (DSPs).

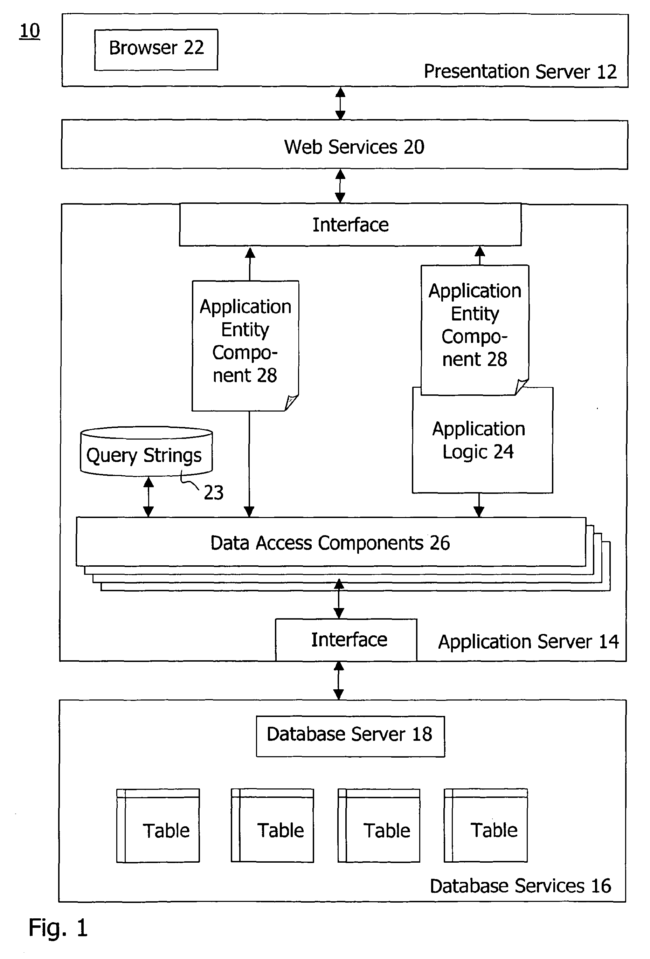

In Fig. 1, a computer system 10 according to a first embodiment of the invention is shown. The computer system 10 is configured as a multi-tiered system, in which presentation, application logic and database services are separated into distinct components. Presentation server 12 manages user interaction and makes requests for application services provided by an application server 14. The application server 14 performs application logic and is coupled to its environment via interfaces that allow to receive and send data. The application server 14 makes requests to database services 16 including a relational database. The database services 16 (also called database) include a database server 18 as well as a plurality of interlinked tables. While there are other options for storing data such as flat files and non-relational databases, the present embodiment is thus direct to relational data storage.

Web services 20 are arranged in an intermediate layer between the presentation server 12 and the application server 14. The web services 20 provide a hypertext transfer protocol (HTTP) based communication interface. They are called by an HTTP request generated by a browser 22 running on the presentation server 12. The web services extract input data from the HTTP request and provide corresponding output data that this forwarded to the application server 14. Additionally, the web services 20 allow a mapping of output data received from the application server 14 to a particular data representation required by the browser 22 running on the presentation server 12.

The core features of the application server 14 are a program memory 23 that provides predefined query strings and an application logic component 24 that processes data received from the presentation server 12 or the database server 18. As becomes apparent from Fig. 1, the application server 14 makes a clear distinction between data persistence logic on the one hand and the data itself on the other hand. This distinction allows for an isolation of the application logic component 24 from database dependencies such as the name of the data source, connection information, field names, etc., and additionally allows the implementation of loosely coupled, message-based communication technologies such as the extensible mark up language (XML).

To attain the distinction between the data persistence logic and the data itself, two different functional components, data access components 26 and application entity components 28, are provided. The data access components 26 retrieve data from the database 16 and store entity data back to the database 16. Additionally, the data access components 26 contain, to a certain extent, application logic needed to achieve data-related operations. The data access components 26 are configured stateless, which means that exchanged messages can be interpreted independently. Accordingly, no state need to be held between consecutive database calls.

As shown in Fig. 1, application entity components 28 received by the application server 14 may be directly passed via the data access components 26 between the presentation server 12 and the database services 16 or may be subjected to data processing within the application logic component 24 before being transferred to the data access components 26. For the purpose of accessing the database services 16 the data access component 26 may be utilized by internal components of the application server 14, directly by external components such as the web services 20 or the browser 22, or using an intermediary such as the web services 20.

The application entity components 28 are used to represent real world entities, such as persons or products. There are numerous ways to represent application entities, including XML structures, data sets or custom object-oriented classes - depending on the physical and logical design constrains of the application logic.

Different types of application entities can be defined. For each application entity, an individual data access component 26 is provided. Each data access component 26 may have methods to implement application logic with respect to the database services 16. Typically, an individual data access component 26 accesses a single database and encapsulates the data-related operations for a single table or a group of related tables in the database 16. Accordingly, one data access component 26 may be provided to handle a first set of tables in the databases 16, and another data access component 26 may be provided to handle a second set of tables. Decision rules can be implemented for mapping data access components 26 to database tables.

In contrast to the data access components 26, the application entity components 28 provide stateful programmatic access to application data. Application entities may be built from data that typically originates from and is written back to multiple related tables in the database 16. As becomes apparent from Fig. 1, application entity components 28 do not access the database 16 directly. All database access is provided by the data access components 26.

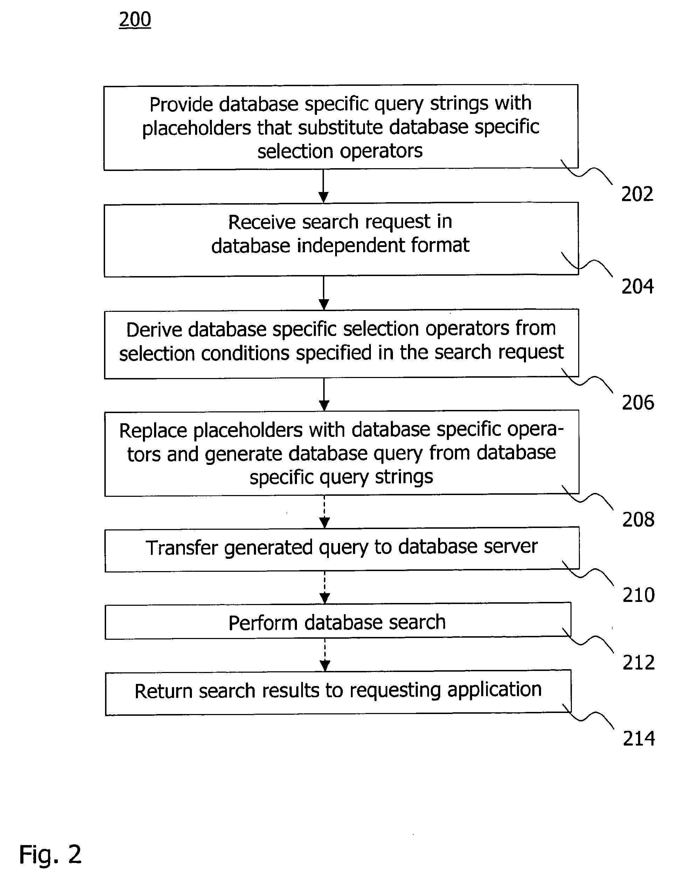

In the following, the steps performed by the individual components of the computer system 10 shown in Fig. 1 when generating a database query will be generally described with reference to the flowchart 200 of Fig. 2.

In a first step 202, one or more generic database specific query strings are provided in a form that can be processed by the data access components 26. The query strings may be provided by the database services 16 or may be stored as program code portions in the program memory 23 of the application server 14. The database specific query strings are generic in that they do not include database specific selection operators. Instead, placeholders are provided at one or more positions within the strings at which the database server 18 (when parsing the database query) would expect a selection operator.

A user is requested by the browser 22 running on the presentation server 12 to specify the selection conditions for the search that is to be performed. The browser 22 then generates a search request by packing the (database independent) selection conditions in an HTTP request and transfers this HTTP request to the web services 20. The web services 20 extract the search request (including the selection conditions) from the HTTP request and pack it into a predefined application entity component 28 that is sent to the application server 14.

The application server 14 receives the application entity component 28, including the database independent selection conditions, in step 204. If required, the application entity relating to the search request is processed by the application logic 14 to normalize the (usually) presentation specific search criteria into an application specific format. It is also possible that this normalization, if required, is already performed by the web services 20. In this case the application entity component relating to the search request may be passed directly to the appropriate data access component 26. Otherwise, the data access component 26 receives the application entity component after it has been output by the application logic component 24.

The data access component 26 called, for example, by the web services 20 or the application logic component 24 first analyzes the selection conditions included in the search request with respect to the presence of database independent selection types. From the identified database independent selection types, database specific selection operators are derived in step 206. To this end, a mapping scheme may be implemented.

If more than one predefined generic query string has been provided in step 202, the called data access component 26 selects an appropriate query string on the basis of the content of the search request and replaces in step 208 placeholders included in the selected string with the one or more database specific selection operators determined in step 206.

After the placeholders have been replaced in step 208, the database query is in a format that can be readily passed to and executed (or parsed) by the database server 18. Accordingly, the data access component 26 may transfer the database query to the database server 18 in a step 210. The database server 18 may then perform the database search, in step 212, as specified in the database query. In a next step 214, the search results may be returned to the appropriate data access component 26 of the application server 14, which may pass it as an application entity to the web service 20. The web service 20 may extract the search results from the application entity and send the extracted search results in an HTTP compatible format to the browser 22 of the presentation server 12.

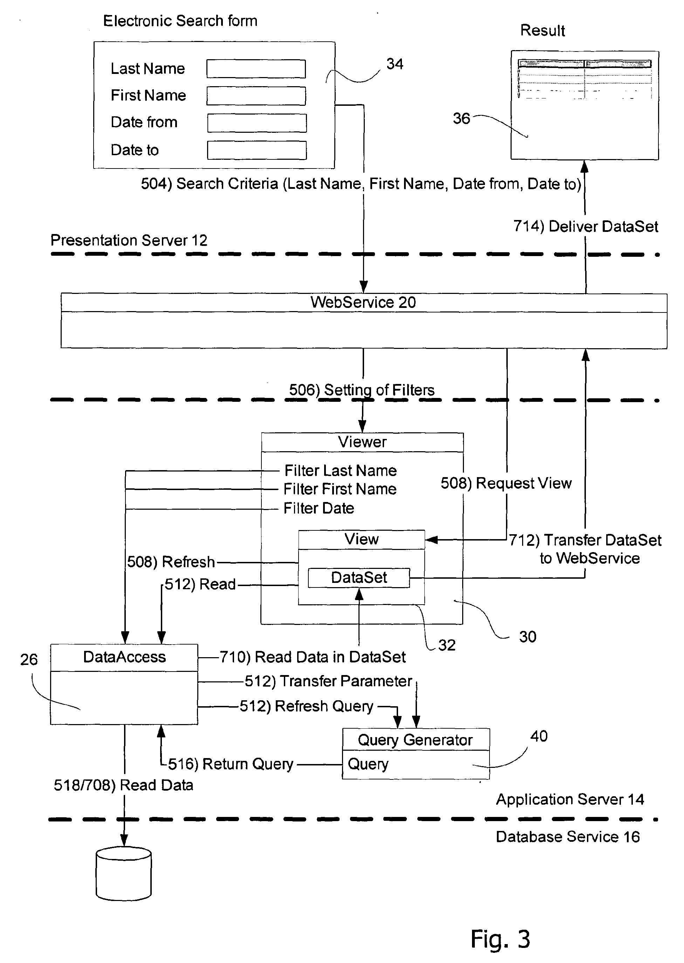

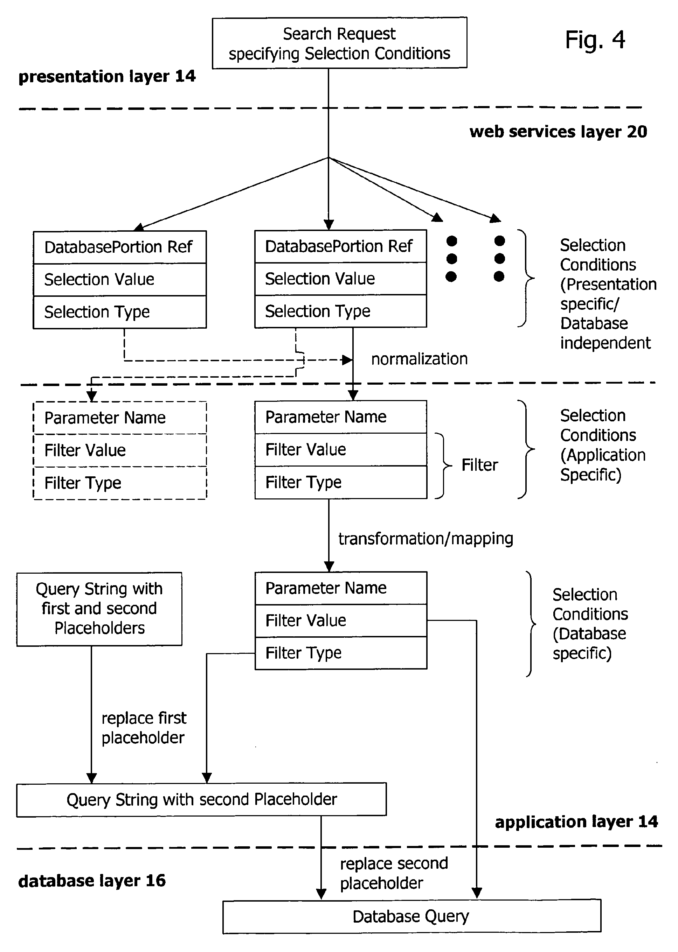

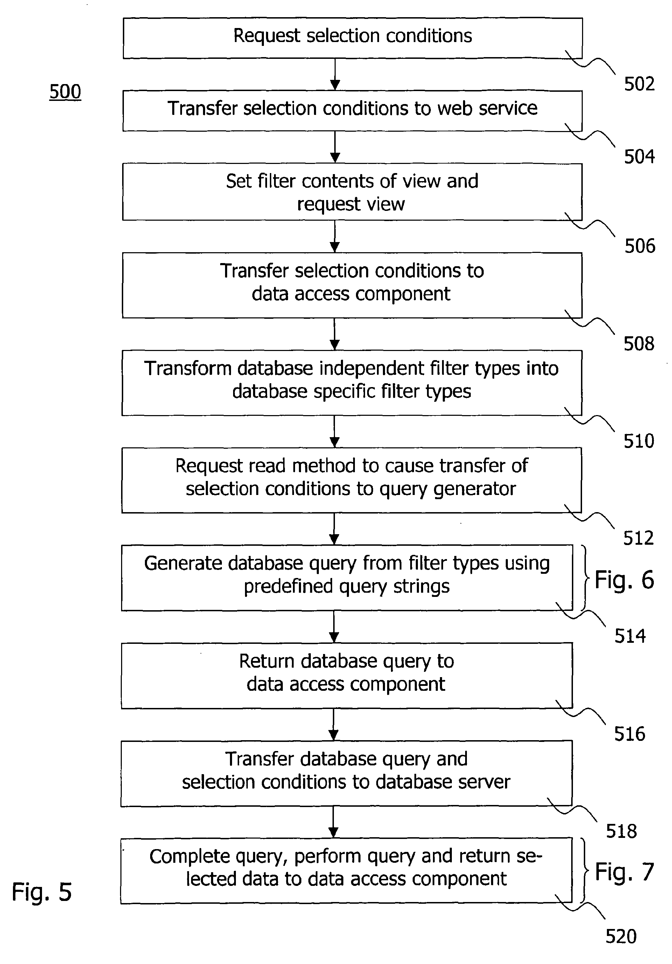

Now a second embodiment of the invention will be described with reference to the hardware-oriented flowchart of Fig. 3, the schematic diagram of Fig. 4 and the flowcharts of Fig. 5 to 7. The second embodiment utilizes a computer system similar to that of Fig. 1. Accordingly, similar components in Fig. 4 are denoted with the same reference numerals as in Fig. 1 and a more detailed description thereof will be omitted.

In the second embodiment, the application server 14 includes a viewer 30. The viewer 30 is a container for individual table views 32. From the relational database perspective, a view 32 is a virtual table that contains data that are actually stored in other tables. The content of a view is dynamically generated upon request. In the second embodiment, each view 32 includes a name, a specification of the type of the data set which is returned by the view 32, and a list of data access components that are required to fill the data set. The viewer 30 includes functionalities for managing the individual views 32, including adding and deleting views 32 in runtime.

In the following, the steps for generating a database query according to the second embodiment of the invention will be described in more detail with reference to Figs. 1 and 3 to 7.

As becomes apparent from the flowchart 500 of Fig. 5, the generation of the database query commences, in step 502, with requesting the user to input selection conditions. Selection conditions can be input via a dedicated electronic search form presented by the browser 22. In Fig. 3 the exemplary appearance of such an electronic search form 34 is shown.

In the second embodiment, the search relates to the retrieval of specific data such as an address or financial information associated with one or more particular persons. The user is requested by the search form 34 to specify selection values relating to the name of a person for which database records are to be retrieved and/or relating to information about the creation date of the data records to be retrieved. Additionally, the search form 34 may request the user to specify (e.g., via buttons or additional data entry fields not shown in Fig. 3) for each selection value an individual selection type (which indicates, for example, that an exact or any other type of match is required). The default selection type for each individual search criteria may indicate that an exact match is required.

As becomes apparent from Fig. 3, the user has the possibility of entering selection conditions (i.e., selection values and, not shown in Fig. 3, selection types) for the four search criteria "LastName", "FirstName", "Date from" and "Date to" in the corresponding empty fields. The search criteria "LastName" and "FirstName" relate to details about the names of persons for which database records are to be retrieved and listed. The search criteria "Date from" and Date to" permit to further limit the search by referring to information about the creation date of the database records to be retrieved. A list of all database records matching the selection conditions entered for the four search criteria in the search form 34 will finally be displayed in a result window 36 of the browser 22.

Now the steps performed between entering the selection conditions and displaying the search result will be described in more detail.

After the user has entered selection conditions for one or more of the four search criteria shown in the electronic search form 34 of Fig. 3, he or she activates a control element (not shown), such as a screen button or the enter key on his keyboard, to initiate the search. In response to the activation of the control element, the selection conditions are packed by the browser 22 as a search request in an HTTP request and sent to the web service 20 in step 504. The selection conditions are transferred to the web service 20 in the format of a string array.

If the user wishes, for example, to generate a list of all database records generated for a person named Hans Müller on or before 1.1.2003, he may simply enter the last name "Müller", the first name "Hans" and the to-date "1.1.2003" in the appropriate fields of the electronic form 34. The browser 22 automatically generates the following string array from the user input, that is sent as a search request to the web service 20:

### Example 1

| Database Portion Ref | User-Specified Selection Value | User-Specified (or Default) Selection Type |
|---|---|---|
| LastName | Müller | Exact |
| FirstName | Hans | Exact |
| Date From | - | - |
| Date To | 1.1.2003 | - |

If the user wishes to generate a list of all database records of persons with a first name containing "Hans" and a last name starting with "Müll" that have been created between 1.1.2002 and 1.1.2003, the user enters "Müll" in the field titled "LastName", "Hans" in the field captioned "FirstName", "1.1.2002" in the field captioned "Date from" and "1.1.2003" in the field captioned "Date to". Additionally, the user enters (or otherwise selects) the selection type "Starts With" for the search criteria "Last-Name" and the selection type "Contains" for the search criteria "FirstName". The browser 22 then automatically generates a search request (in the form of the following string array) and transfers it in an HTTP request to the web service 20:

### Example 2

| Database Portion Ref | Selection Value | Selection Type |
|---|---|---|
| LastName | Müll | Starts With |
| FirstName | Hans | Contains |
| Date From | 1.1.2002 | - |
| Date To | 1.1.2003 | - |

The selection conditions specified in the above string arrays include four presentation specific selection conditions associated with the search criteria "LastName", "FirstName", "Date from" and "Date to". Each selection condition includes a database portion reference, a selection value and a selection type. As will be described below in more detail, the selection type forms the basis for deriving a database specific selection operator when generating the database query. As becomes apparent from Fig. 4, the selection conditions received by the web services 20 have a format that is presentation specific and database independent.

In the present embodiment, the user only inputs the selection values (and, if required, corresponding selection types) indicated in the above tables. The browser automatically correlates for each search criteria, a reference to a particular portion of database that is to be searched on the basis of the particular selection value and the particular selection type associated therewith. The database portion reference need not necessarily be identical with an actually existing database portion (like a table column). It is sufficient if the database portion referenced in the string array transferred to the web service 20 can be mapped to or otherwise associated with an existing database portion. The mapping or associating process can be performed later, for example by the application server 14 or by the database server 18.

In step 506, the web service 20 performs a normalization operation by deriving application specific selection conditions from the presentation specific selection conditions received from the browser 22 (see Fig. 4). The web service 20 analyzes the HTTP request received from the browser 22 with respect to the selection conditions specified therein. The normalization operation includes the setting of database independent filter contents of the viewer 30.

Regardless of the number of selection values (and selection types) specified by the user, the string array transferred from the browser 22 to the web services 20 always includes information about each of the four search criteria specified by the electronic search form 34. If a user has refrained from entering a particular selection value, the corresponding field of the string array transferred to the web services 20 simply remains empty and the corresponding filter of the viewer 30 remains un-initialized. The strategy of always transferring complete search criteria relating to a predefined set of selection conditions from the browser 22 to the web services 22 facilitates interface programming.

Setting the filters of the viewer 30, in step 506, can include a normalization operation in which two or more presentation specific selection conditions are mapped on a single application specific selection condition, or in which a single presentation specific selection condition is mapped on two or more application specific selection conditions as illustrated in Fig. 4. In the present embodiment, the selection conditions relating to the two search criteria "Date from" and "Date to" are mapped on a single selection condition having the parameter name "Date". This is illustrated below for the two examples mentioned above.

### Example 1

| Database Portion Ref | Selection Value | Selection Type |
|---|---|---|
| LastName | Müller | Exact |
| FirstName | Hans | Exact |
| Date From | - | - |
| Date To | 1.1.2003 | - |
| ↓ | | |
| Database Portion Ref | Filter Value | Filter Type |
| Filter of Parameter LastName | "Müller" | Equal |
| Filter of Parameter FirstName | "Hans" | Equal |
| Filter of Parameter Date | "1.1.2003" | Smaller or Equal |

### Example 2

| Database Portion Ref | Selection Value | Selection Type |
|---|---|---|
| LastName | Müll | Starts With |
| FirstName | Hans | Contains |
| Date From | 1.1.2002 | - |
| Date To | 1.1.2003 | - |
| ↓ | | |
| Database Portion Ref | Filter Value | Filter Type |
| Filter of Parameter LastName | "Müll%" | Starts with |
| Filter of Parameter FirstName | "%Hans%" | Contains |
| Filter of Parameter Date | ("1.1.2002","1.1.2003") | Between |

As becomes particularly apparent from the second example, the normalization operation includes a mapping of the two presentation specific selection conditions relating to the search criteria "Date from" and "Date to" to the single application specific selection condition named "date". Moreover, the application specific (and SQL specific) wildcard "%" is appended to selection values entered by the user in accordance with the user-specified selection type. Furthermore, the selection value in the presentation specific selection condition is normalized to an appropriate application specific filter value. Accordingly, presentation specific selection types are normalized to application specific filter types (see Fig. 4).

Once the filters of the viewer 30 have been set, the web service 20 requests a particular view 32 (by specifying a particular view name) in step 506. In response to this request, the view 32 refreshes its associated data access component 26 by transferring the application specific selection conditions (each selection condition including a parameter name, a filter value and a filter type) to the data access component 26 in step 508. As the two presentation specific selection conditions relating to the search criteria "Date from" and "Date to" have been mapped onto a single application specific selection condition, only three selection conditions are transferred in step 508. In the case the user did not specify a selection condition for a particular search criteria, the corresponding filter of the view 32 remains un-initialized. In such a case a selection condition including an un-initialized filter would be transferred to the data access component 26.

Upon receipt of the application specific selection conditions, the data access component 26 transforms any database independent filter type specified in the selection conditions into a database specific (SQL) filter type (step 510). To this end, a mapping scheme may be employed. This mapping scheme would specify in the first example above that the application specific filter type "smaller or equal" is mapped on the SQL specific filter type "<=".

The transformation of the database independent filter types into the database specific filter types in step 510 is also depicted in Fig. 4. As illustrated, the application specific selection conditions including database independent filter types are mapped or otherwise transformed to database specific selection conditions including database specific filter types.

After the transformation in step 510, the view 32 requests a read method of the data access component 26 in step 512 to cause the data access component 26 to transfer the database specific selection conditions to a query generator 40 associated with the data access component. The query generator 40 is used to generate in step 514 the database query on the basis of the information received from the data access component 26 and on the basis of one or more predefined generic query strings. In the second embodiment, the query generator 40 is configured as a dedicated program code portion that can be called by the data access component 26 each time a data base query is to be generated.

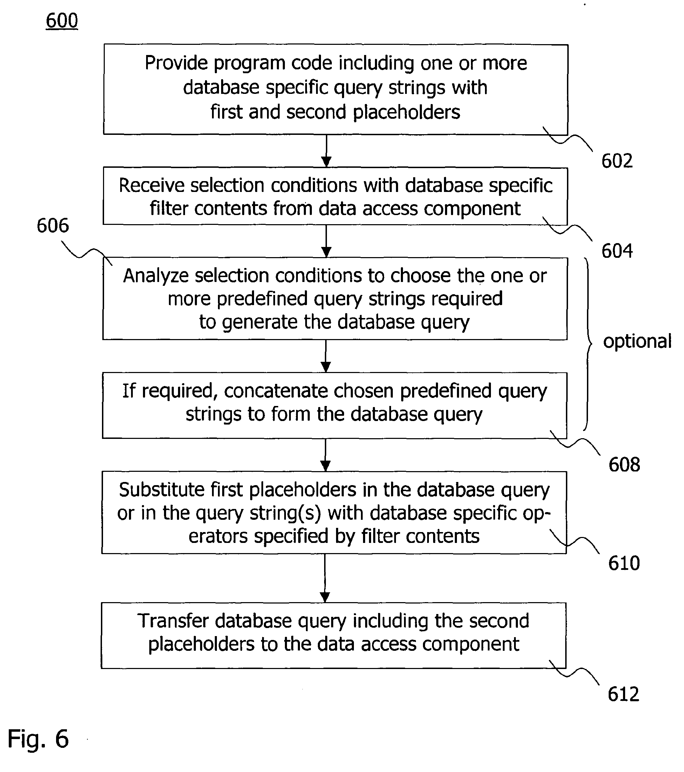

In the following, the generation of exemplary SQL database queries will be described with reference to the flowchart 600 of Fig. 6.

In a first step 602 program code including one or more database specific generic query strings with first and second placeholders is provided. In a next step 604 database specific selection conditions including database specific filter types are received from the data access component. Step 604 thus corresponds to step 512 of the flowchart 500 depicted in Fig. 5.

According to the most simple example, only a single query string is provided in step 602. In this case, the method can proceed from step 604 directly to step 610 in which the one or more first placeholders in the single query string are replaced with the database specific operators specified by the filter contents of the received selection conditions. The corresponding program code including such a single generic query string may include the following code portion:

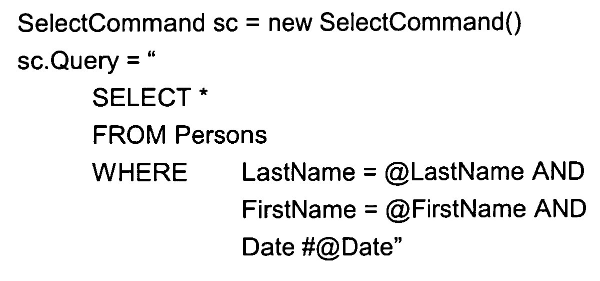

This program code is configured to instantiate a new object sc from a class SelectCommand(). The newly instantiated object sc relates to the predefined generic SQL query string "SELECT* FROM Persons WHERE LastName =@LastName AND FirstName = @FirstName AND Date #@Date". This generic query string includes a first placeholder type in the form of the dynamic operator "#", which replaces a database specific operator. Furthermore, the query string includes a second placeholder type (in the form @xyz) substituting a particular filter value.

The query generator 40 only substitutes the placeholders of the first type and returns a database query that still includes the placeholders of the second type. As will be explained below, the placeholders of the second type will only be replaced by the SQL server 18 (see Fig. 4).

Assume the query generator 40 receives the following database specific selection conditions (that have been generated from the application specific selection conditions of example 1 mentioned above):

| Database Portion Ref | Filter Value | Filter Type |
|---|---|---|
| Filter of Parameter LastName | "Müller" | Equal |
| Filter of Parameter FirstName | "Hans" | Equal |
| Filter of Parameter Date | "1.1.2003" | <= |

Based on the above selection conditions and the generic query string included in above program code portion, the query generator 40 generates the following database query by substituting the placeholder of the first type associated with the parameter name "Date":

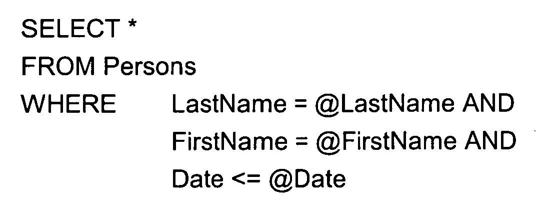

This database query still includes all placeholders of the second type. The placeholders of the second type will be replaced with the corresponding filter values by the database server 18. In the first example, the finial query string (with substituted placeholders of the second type) generated by the database server 18 will thus have the following appearance.

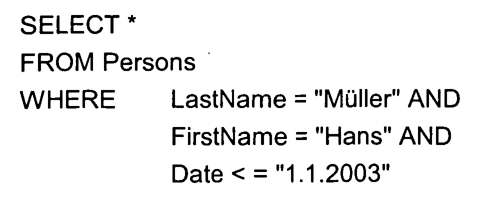

The single generic query string included in the above program code includes only a single placeholder of the first type, namely for the selection condition with the parameter name "Date". Of course, the generic query string could also include two or three placeholders of the first type. An example for a generic query string (that could be incorporated in the above program code) including three placeholders of the first type is set out below:

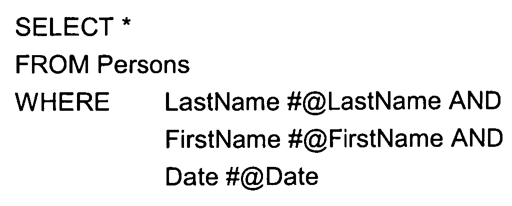

The filter associated with a specific selection condition need not necessarily include a single value but could also include no value or two values. The filter type "between" used in the second example requires, for example, the specification of two distinct filter values. The corresponding query string provided by the query generator 40 in the case of the second example for the filter type "between" might have the following format:

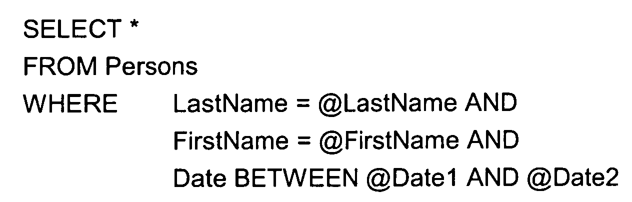

The exemplary database queries set forth above are static in that the WHERE clause has always the same appearance. Already this static approach greatly reduces the number of provided generic query strings due to the provision of the placeholder "#" that substitutes any database specific operators. Accordingly, it is not required to define a single query string for each database specific operator and combination of database specific operators.

As the static WHERE clause of the above database queries always specifies selection conditions for all database-related search criteria (LastName, FirstName, Date), it is required that the user mandatorily fills in particular fields of the electronic search form 34 shown in Fig. 3. In order to increase the flexibility, a plurality of different generic query strings may be provided. In this case, the query generator 40 will have to analyze the selection conditions to choose the particular query string required to generate a database query for the user-selected search criteria (step 606 in Fig. 6). Once the appropriate query string has been chosen, concatenating operations may become necessary (step 608). The method then proceeds with step 610 in which the one or more first placeholders in the chosen query string are replaced.

A program code portion providing a plurality of different generic query strings and allowing to choose the query string best matching the selection conditions specified in the search criteria could have the following format:

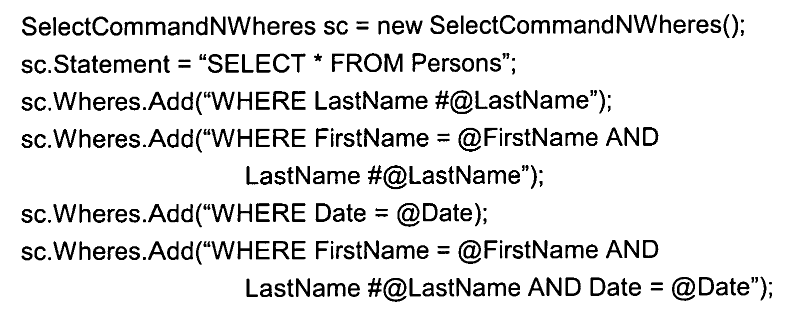

The above program code portion provides a first predefined query string ("SELECT * FROM Persons") that includes a reference to the database table "persons" as well as four additional predefined query strings with different WHERE clauses that may individually be concatenated with (or appended to) the first query string including the database portion reference.

A routine is provided that decides which of the four WHERE clauses is to be appended to the string "SELECT * FROM Persons". The routine specifies that the clause to be appended must be executable (which means that all required filter contents are available) and must have the highest number of parameters in common with the selection conditions specified in the search request. This means for example that:
- the first clause is appended if the user has input only a last name;
- the second clause is appended if the user has specified a first name and a last name;
- the third clause is appended if a user has specified a first name and a date (because the third clause is executable and no clause that better matches the user-specified search criteria exists); or
- the fourth clause is appended if the user has specified a first name, a last name and a date;
- no clause is appended if the user has specified only a first name (no clause executable);
- no clause is appended if only the last name and the date are specified (the request is rejected because both the first and the third clause are executable and relate to the same number of parameters)

The above approach permits the dynamic generation of a database query dependent on the number and types of parameters (selection conditions) available. It allows the processing of various search variants but does not process all parameter combinations. If all parameter combinations are allowable, the query generator 40 operates on the basis of a program code portion that includes elementary generic query strings as follows:

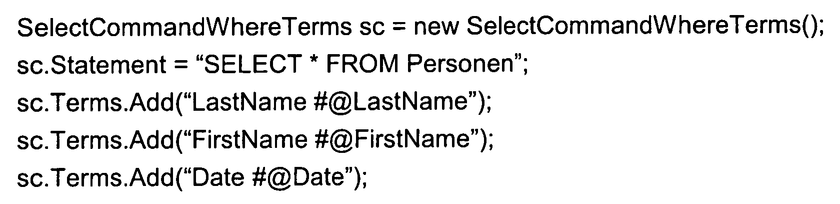

The above program code portion covers all parameter combinations and search variants. A particular elementary query string like "LastName #@ LastName" is included in a WHERE clause if filter contents have been specified for the selection condition with the corresponding parameter name "LastName". Accordingly, the query generator 40 analyzes, in step 606, the set of selection conditions to choose the one or more elementary query strings required to generate the requested database query.

The chosen elementary query strings are then concatenated in step 608 to form the database query. If, for example, filter contents are specified for the selection conditions with the parameter names "LastName" and "FirstName", the concatenating operation performed in step 608 will deliver the following query string with first and second placeholders.

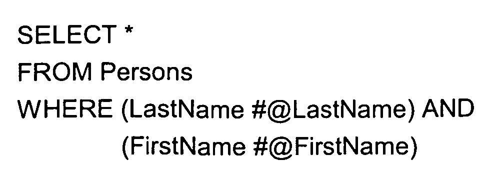

The operator (e.g. "AND") which is used to concatenate the individual elementary query strings may be predefined by the program code or may be defined by a user and may thus be included in the selection conditions received by the query generator 40.

In a next step 610, the first placeholders "#" included in the above query string are replaced with the appropriate filter types specified in the selection conditions. After the first placeholders "#" have been substituted in step 610 as outlined above, the database query (still including the second placeholders) is returned to the data access component in step 612. Step 612 corresponds to step 516 in the flowchart 500 of Fig. 5.

Once the newly generated database query has been returned to the data access component 26 in step 516, the database query and the selection conditions associated therewith are transferred to the database server 18 in step 518. The database server 18 completes the received query by substituting the second placeholders, by parsing and executing the completed query and by returning the selected data to the data access component 26 (step 520).

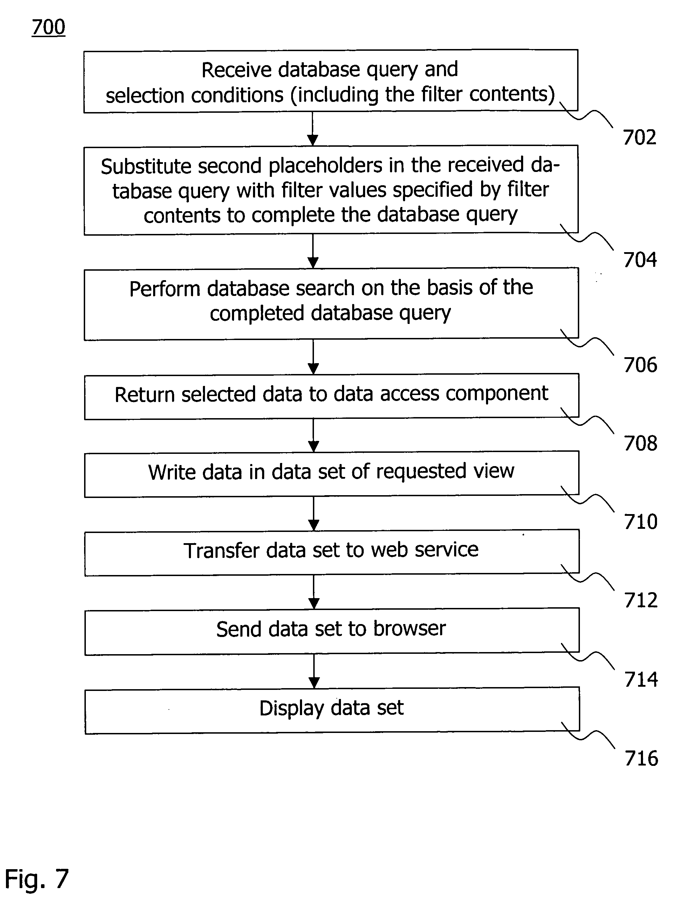

The details of step 520 will now be described with reference to the flow chart 700 shown in Fig. 7.

The database server 18 receives the database query and the corresponding set of selection conditions (including the filter contents) from the data access component 26 in step 702. In step 704, the database server 18 analyzes the received database query with respect to the presence of second placeholders (@ LastName, @FirstName, @Date) and replaces the second placeholders included in the received database query with the one or more filter values derived from the corresponding selection condition. Thus, the database query is completed (see Fig. 4).

In step 706 the database server 18 parses the completed database query and performs a database search. The selected data are then returned to the data access component 26 in step 708. The data access component writes the data received from the database server 18 in a data set of the requested view (step 710). The data set is then transferred to the web service 20 in step 712. The web service 20 packs the data set in a HTTP message and sends it in step 714 to the browser 22, which displays in the result window 36 a list corresponding to the data included in the data set (step 716).

The above embodiments of the invention have shown that the placeholder approach allows for an easy handling of query strings that have to be provided in context with the generation of database specific queries from database independent search criteria. The approach of concatenating individual query strings when generating the database query enhances the data input flexibility and, in many cases, helps to reduce the number of query strings that have to be provided in order to handle the specification of a varying number of search criteria.

In the foregoing, the principles, preferred embodiments and different modes of the present invention have been described. However, the invention should not be construed as being limited to the particular embodiments discussed above. It should be appreciated that variations may be made by a person skilled in the art without departing from the scope of the present invention as defined by the following claims.

## Claims

1. A method of generating a database query from a database independent search request, comprising the steps
- providing one or more predefined query strings in a database specific format, wherein the predefined query strings include one or more first placeholders (#) that are substitutes for database specific selection operators;
- receiving a search request in a database independent format, the search request specifying at least one selection condition;
- deriving one or more database specific selection operators from the at least one selection condition specified in the search request; and
- substituting a first placeholder (#) in one or more of the predefined query strings with at least one previously derived database specific selection operator when generating the database query.

2. The method of claim 1, wherein generating the database query includes concatenating two or more predefined query strings that each relate to at least one selection condition.

3. The method of claim 2, wherein each predefined query string that includes one or more first placeholders (#) relates to exactly one selection condition.

4. The method of any of the preceding claims, wherein generating the database query includes selecting a predefined query string dependent on a combination of two or more selection conditions specified in the search criteria.

5. The method of any of the preceding claims, wherein generating the database query includes selecting a particular predefined query string that has the highest number of selection conditions in common with the search request.

6. The method of one of the preceding claims, wherein the received search request relates to a predefined set of selection conditions.

7. The method of any of the preceding claims, wherein the predefined query strings include second placeholders (@xyz) that are substitutes for selection values.

8. The method of claim 7, further comprising deriving database specific selection values (%abc) from the search request taking into account respective selection operators specified in the search request.

9. The method of claim 7 or 8, further comprising transferring the selection values and the database query with substituted first placeholders (#) but non-substituted second placeholders (@xyz) to a database service.

10. The method of any of the preceding claims, further comprising deriving application specific normalized selection conditions from presentation specific selection conditions specified in the search request.

11. The method of claim 10, wherein the normalized selection conditions include at least one of: filter type information indicative of selection operators, filter value information indicative of selection values, and a database portion reference.

12. The method of claim 10 or 11, wherein the normalized selection conditions are transferred to a data access component controlling the generation of the database query on the basis of the normalized selection conditions.

13. The method of claim 12, wherein the database specific operators are determined taking into account the filter type information.

14. The method of any of the preceding claims, wherein the predefined query strings are provided in the form of program code portions.

15. A computer program product comprising program code portions for performing the steps of one of claims 1 to 14 when the computer program product is run on a computer system.

16. The computer program product of claim 15 stored on a computer readable recording medium.

17. A computer component (14) for generating a database query from a database independent search request, comprising
- a storage device (23) or access to a storage device (23) for providing one or more predefined query strings in a database specific format, wherein the predefined query strings include one or more first placeholders (#) that are substitutes for database specific selection operators;
- a first interface for receiving a search request in a database independent format, the search request specifying at least one selection condition;
- a processor (26) for deriving one or more database specific selection operators from the at least one selection condition specified in the search request, and for substituting a first placeholder (#) in one or more of the predefined generic query strings with one or more of the previously derived database specific selection operators when generating the database query.

18. The computer component of claim 17, further comprising a second interface to a database layer (16) for sending the generated database query and for receiving the requested data.

19. A computer system (10) comprising the computer component (14) of claim 18 or 19, and being configured as a multi-tiered system.

20. The computer system of claim 19, wherein the computer component is configured as an application server (14), and further comprising presentation and database servers (12; 16) coupled to the application server (14) via the first and the second interfaces, respectively.
